(19) Europäisches Patentamt / European Patent Office / Office européen des brevets

(11) **EP 2 987 081 B1**

(12) **FASCICULE DE BREVET EUROPEEN**

(45) Date de publication et mention de la délivrance du brevet:
**08.05.2024 Bulletin 2024/19**

(21) Numéro de dépôt: **14715373.8**

(22) Date de dépôt: **17.03.2014**

(51) Classification Internationale des Brevets (IPC):
**G06F 9/48** *(2006.01)*  **G06F 11/07** *(2006.01)*

(52) Classification Coopérative des Brevets (CPC):
**G06F 9/4887; G06F 11/0715; G06F 11/0757; G06F 11/0793;** Y02D 10/00

(86) Numéro de dépôt international:
**PCT/FR2014/050613**

(87) Numéro de publication internationale:
**WO 2014/170569 (23.10.2014 Gazette 2014/43)**

(54) **PROCÉDÉ D'ALLOCATION TEMPORELLE DE TÂCHES PERMETTANT UNE RÉCUPÉRATION D'ERREUR DETERMINISTE EN TEMPS RÉEL**

VERFAHREN ZUR ZUWEISUNG VON TASKZEITEN MIT DETERMINISTISCHER FEHLERBESEITIGUNG IN ECHTZEIT

TASK TIME ALLOCATION METHOD ALLOWING DETERMINISTIC ERROR RECOVERY IN REAL TIME

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **19.04.2013 FR 1353630**

(43) Date de publication de la demande:
**24.02.2016 Bulletin 2016/08**

(73) Titulaire: **KRONO-SAFE**
**91300 Massy (FR)**

(72) Inventeur: **DAVID, Vincent**
**F-91460 Marcoussis (FR)**

(74) Mandataire: **Marchand, André et al**
**Omnipat**
**610, chemin de Fabrègues**
**13510 Éguilles (FR)**

(56) Documents cités:
US-A1- 2003 187 907

- **CHABROL D ET AL: "A spatial and temporal partitioning approach for dependable automotive systems", EMERGING TECHNOLOGIES&FACTORY AUTOMATION, 2009. ETFA 2009. IEEE CONFERENCE ON, IEEE, PISCATAWAY, NJ, USA, 22 septembre 2009 (2009-09-22), pages 1-8, XP031575697, ISBN: 978-1-4244-2727-7**
- **Lamine Bougueroua ET AL: "Temporal Robustness of Real-Time Architectures Specified by Estimated WCETs", International Journal On Advances in Software, 1 janvier 2009 (2009-01-01), pages 359-371, XP055096296, Extrait de l'Internet: URL:http://hal-univ-mlv.archives-ouvertes. fr/hal-00619738/en/**
- **ALI SHARIF AHMADIAN ET AL: "A control-theoretic energy management for fault-tolerant hard real-time systems", COMPUTER DESIGN (ICCD), 2010 IEEE INTERNATIONAL CONFERENCE ON, IEEE, PISCATAWAY, NJ, USA, 3 October 2010 (2010-10-03), pages 173-178, XP031810137, ISBN: 978-1-4244-8936-7**

**Description**

La présente invention concerne les systèmes multitâches temps-réel, comprenant un ensemble de tâches cadencées par une même base de temps, indépendantes temporellement, et pour lesquelles les contraintes d'exécution temporelles sont connues. L'invention concerne en particulier les systèmes temps-réel nécessitant un haut niveau de performance dans leur mise en oeuvre, ainsi que les systèmes critiques pour lesquels un haut niveau de garantie est exigé quant à l'utilisation des ressources matérielles d'exécution allouées pour chaque tâche du système.

La présente invention s'applique notamment aux systèmes de contrôle-commande tels que ceux utilisés dans les domaines des transports (automobile, ferroviaire, naval, aéronautique), des automates industriels, de l'énergie, ainsi que d'autres systèmes pour lesquels l'allocation maîtrisée des ressources est importante, comme dans les réseaux de communication.

Dans les systèmes temps-réel critiques, les tâches sont souvent exécutées selon des méthodes d'ordonnancement statique, afin d'effectuer une allocation temporelle statique de quotas de temps d'utilisation des ressources d'exécution comme le processeur. Cela permet de démontrer l'indépendance temporelle des tâches entre elles en ce qui concerne l'utilisation des ressources, et en particulier, celles du processeur. Cette vision simple et communément acceptée ne considère pas le problème des communications entre tâches, qui est traité notamment dans les documents [3], [4], [7], [8]. Le document "A Spatial and Temporal Partitioning Approach for Dependable Automotive Systems", D. Chabrol, et al., Emerging Technologies & Factory Automation, 2009 IEEE International Conférence on, IEEE, Piscataway (2009-09-22), pp. 1-8, propose d'attribuer aux tâches d'un système temps réel des quotas de temps d'exécution, avec une marge de temps permettant à un noyau temps réel de surveiller ces quotas. Le document "A control-theoretic energy management for fault-tolerant hard real-time systems", Ali Sharif Ahmadian et al,, Computer Design (ICCD), 2010 IEEE International Conférence on, IEEE, Piscataway (2010-10-03), pp. 173-178, décrit système multi-tâches dans lequel chaque tâche est associée à une période ayant une date de fin, la période étant divisée en un temps pour l'exécution de la tâche et une marge de temps statique pour exécuter une procédure de restauration en cas d'erreur, durant laquelle la tâche est réexécutée à la fréquence maximum du processeur.

Cependant, cette vision pose des difficultés de mise en oeuvre sur des processeurs modernes qui incluent des mémoires caches. En effet, le contenu de ces mémoires caches dépend de tout l'historique d'exécution des tâches et des données accédées. Or l'état de ces mémoires influe sur les temps d'exécution des traitements des tâches entrelacées. Dans ces conditions, il est difficile de garantir un majorant absolu du temps d'exécution (WCET - Worst Case Execution Time - cf. document [5]) d'un traitement. Les méthodes de calcul formel de ces majorants conduisent donc à une surestimation potentiellement importante de ces majorants en regard des résultats expérimentaux.

Par ailleurs, dans certains systèmes temps-réel multitâches, il est nécessaire de garantir que les tâches n'interfèrent pas entre elles, c'est-à-dire qu'une tâche ne peut pas être exécutée ou terminer son exécution durant le temps alloué à une autre tâche. La recherche d'une telle non-interférence entre les tâches conduit dans certains domaines à désactiver les mémoires caches ou à les vider de tout leur contenu en début de chaque fenêtre temporelle allouée à un traitement afin d'avoir un état (vide) indépendant de l'exécution des traitements passés. Cependant, cette opération de vidage des mémoires caches pénalise de manière importante les performances du système multitâche. En outre, un traitement peut dans certains cas être découpé en plusieurs fenêtres temporelles, ce qui implique que les mémoires caches soient vidées plusieurs fois durant l'exécution du traitement.

Pour ces différentes raisons, les concepteurs de systèmes temps-réel sont conduits à fortement surdimensionner de tels systèmes. D'un point de vue pratique, afin de rendre cette approche moins pénalisante, l'allocation temporelle du processeur est effectuée sur une base d'un besoin de temps d'exécution inférieur au WCET "théorique", conduisant à accepter un certain taux d'erreur. La faiblesse de cette approche réside dans l'absence de modèle caractérisant la loi de distribution des temps d'exécution d'un traitement, permettant réellement d'apprécier le taux d'erreur vis-à-vis d'un quota de temps alloué. En particulier lorsque le taux d'erreur acceptable doit être très bas, et donc résultant d'événements très rares, cette approche qui est fondée sur des échantillons expérimentaux trop peu nombreux, ne permet pas de démontrer que ces systèmes présentent un comportement déterministe. Aussi, pour améliorer la robustesse de tels systèmes, il est connu de mettre en place des mesures de récupération de telles erreurs sur les quotas de temps d'exécution, afin de réduire les cas d'erreur résiduelle à un nombre extrêmement bas.

A noter que pour contourner cet important problème de surdimensionnement, il est courant d'utiliser le temps non utilisé (écart entre le temps d'exécution moyen et le quota de temps alloué) en le réallouant dynamiquement à des tâches non temps-réel et non critiques, exécutées en tâche de fond non prioritaire (cf. documents [2], [7], [8]). Cependant, cette solution ne répond pas au même objectif et n'apporte rien aux tâches temps-réel critiques.

De la même manière, pour d'autres types d'erreurs susceptibles d'apparaître lors de l'exécution d'une tâche temps-réel critique, il est profitable de bénéficier de tels mécanismes de traitement d'erreur déterministe, en temps-réel, sans interférence avec les autres tâches en cours d'exécution. Cela permet de récupérer les erreurs sans discontinuité dans le flot d'exécution de la tâche et de garantir la mise en oeuvre d'actions adéquates avec des contraintes temporelles adéquates. Ces problèmes ont des solutions connues dans les systèmes asynchrones, c'est-à-dire sans contraintes de temps d'exécution. Cependant, ces solutions ne permettent pas de garantir une performance temps-réel, et ne sont pas adaptées au contexte de tâches critiques où l'on vise une non-interférence des traitements entre eux, y compris bien sûr en cas d'anomalie de fonctionnement.

Il est donc souhaitable de pouvoir générer une application comprenant un ensemble de tâches cadencées par une même base de temps, tout en garantissant une utilisation performante et sûre du système multitâche sur lequel s'exécute les tâches. Il peut être également souhaitable de pouvoir attribuer un temps suffisant au traitement d'erreur, afin que ce dernier puisse être effectué en temps déterministe, compatible avec les contraintes d'un système temps-réel critique, sans risque d'interférence avec les autres tâches. Il peut être également souhaitable d'employer le temps alloué, non utilisé, à différentes optimisations comme la régulation thermique, la minimisation de la consommation énergétique, ou l'exécution de manière répartie ou mutualisée de tâches non critiques. Il peut être également souhaitable de pouvoir garantir un séquencement correct des traitements des tâches d'une application, exécutés par un système multitâches, et de pouvoir démontrer formellement que ce séquencement est correct.

Des modes de réalisation concernent un procédé d'exécution de tâches d'une application temps-réel sur un calculateur multitâche, chaque tâche comprenant au moins un traitement, le procédé comprenant des étapes consistant à : définir des fenêtres temporelles associées chacune à l'exécution d'un traitement d'une tâche de l'application, attribuer à chaque traitement ayant une fenêtre temporelle, un quota de temps et une marge de temps, le temps attribué au traitement par le quota de temps et la marge de temps, étant inférieur à la durée de la fenêtre temporelle associée au traitement, durant l'exécution de l'application par le calculateur multitâche, activer chaque traitement au début de la fenêtre temporelle attribuée au traitement, à l'expiration du quota de temps de l'un des traitements, activer un mode d'erreur pour ledit traitement si l'exécution dudit traitement n'est pas terminée, si le mode d'erreur est actif pour l'un des traitements, exécuter une procédure de traitement d'erreur pour le traitement en mode d'erreur, durant le temps restant attribué au traitement par le quota de temps et la marge de temps, et poursuivre l'exécution du traitement dont l'exécution n'est pas terminée à l'expiration du quota de temps attribué au traitement, en surveillant l'expiration de la marge de temps attribuée au traitement, et à l'expiration de la marge de temps attribuée au traitement, si l'exécution du traitement n'est pas terminée, mettre fin à l'exécution du traitement et exécuter un traitement d'erreur de dépassement de quota de temps.

Selon un mode de réalisation, le procédé comprend des étapes consistant à : fragmenter les traitements associés à une fenêtre temporelle s'étendant sur plusieurs fenêtres temporelles de traitements d'autres tâches de l'application, de manière à ce que chaque fenêtre temporelle soit associée exclusivement à un traitement ou fragment de traitement, attribuer à chacun des fragments de traitement d'un traitement fragmenté un quota de temps tel que la somme des quotas de temps de tous les fragments du traitement fragmenté soit égale au quota de temps du traitement fragmenté, la marge de temps attribuée au traitement fragmenté étant associée au dernier fragment du traitement fragmenté, et associer à chaque fragment de traitement à une première variable d'état indiquant s'il est le dernier fragment du traitement fragmenté, le mode d'erreur n'étant pas activé à l'expiration du quota de temps d'un fragment de traitement si la première variable d'état associée au fragment de traitement indique que le fragment de traitement n'est pas un dernier fragment d'un traitement fragmenté.

Selon un mode de réalisation, la marge de temps de chacun des traitements associés à un quota de temps est calculée en appliquant un coefficient multiplicateur au quota de temps du traitement, le coefficient multiplicateur étant identique pour tous les traitements associés à un quota de temps.

Selon un mode de réalisation, le coefficient multiplicateur est déterminé de manière à ce que les tâches de l'application puissent être ordonnancées compte tenu des besoins de temps des traitements, des fenêtres temporelles associées aux traitements, et de caractéristiques du calculateur.

Selon un mode de réalisation, les traitements sont exécutés par un processeur cadencé par une première base de temps, et les fenêtres temporelles associées aux traitements sont définies dans une seconde base de temps non régulière par rapport à la première base de temps, une unité de temps dans la seconde base de temps présentant une valeur minimum dans la première base de temps, le coefficient multiplicateur étant défini en fonction de la valeur minimum.

Selon un mode de réalisation, chaque traitement est associé à une seconde variable d'état indiquant s'il réalise une entrée/sortie par rapport à un processeur exécutant le traitement, et si la seconde variable d'état associée à l'un des traitements indique que le traitement ne réalise pas d'entrée/sortie, l'exécution du traitement est lancée sans attendre le début de la fenêtre temporelle du traitement, dès la fin de l'exécution d'un traitement précédent.

Des modes de réalisation concernent également un système multitâche temps-réel comprenant un calculateur multitâche exécutant une application temps-réel comprenant plusieurs tâches, chaque tâche comprenant au moins un traitement, le système étant configuré pour : mémoriser des fenêtres temporelles associées chacune à l'exécution d'un ensemble de traitements de tâches de l'application, mémoriser pour chaque traitement ayant une fenêtre temporelle, un quota de temps et une marge de temps, le temps attribué au traitement par le quota de temps et la marge de temps, étant inférieur à la durée de la fenêtre temporelle du traitement, exécuter chacun des traitements de l'application au début de la fenêtre temporelle attribuée au traitement, et à l'expiration du quota de temps de l'un des traitements, activer un mode d'erreur pour ledit traitement si l'exécution dudit traitement n'est pas terminée, si le mode d'erreur est actif pour l'un des traitements, exécuter une procédure de traitement d'erreur pour le traitement en mode d'erreur, durant le temps restant attribué au traitement par le quota de temps et la marge de temps, et poursuivre l'exécution du traitement dont l'exécution n'est pas terminée à l'expiration de son quota de temps, en surveillant l'expiration de la marge de temps attribuée au traitement, et à l'expiration de la marge de temps, si l'exécution du traitement n'est pas terminée, mettre fin à l'exécution du traitement et exécuter un traitement d'erreur de dépassement de quota de temps.

Selon un mode de réalisation, le système est configuré pour : mémoriser que certains des traitements associés à une fenêtre temporelle sont fragmentés, mémoriser pour chaque fragment de traitement une fenêtre temporelle et un quota de temps, pour l'exécution du fragment de traitement, mémoriser pour un dernier fragment de chaque traitement fragmenté, en tant que marge de temps associée, la marge de temps associée au traitement fragmenté, et mémoriser pour chaque fragment de traitement une première variable d'état indiquant si le fragment est le dernier fragment d'un traitement fragmenté, et durant l'exécution de l'application, ne pas activer le mode d'erreur à l'expiration du quota de temps d'un fragment de traitement si la première variable d'état associée au fragment de traitement indique que le fragment de traitement n'est pas un dernier fragment d'un traitement fragmenté.

Selon un mode de réalisation, le système est configuré pour déterminer la marge de chacun des traitements associés à un quota de temps en appliquant un coefficient multiplicateur au quota de temps du traitement, le coefficient multiplicateur étant identique pour tous les traitements associés à un quota de temps.

Selon un mode de réalisation, le système comprend un processeur cadencé par une première base de temps, pour exécuter les traitements, et recevant une seconde base de temps non régulière par rapport à la première base de temps, le système étant configuré pour déterminer les fenêtres temporelles associées aux traitements dans la seconde base de temps, une unité de temps dans la seconde base de temps présentant une valeur minimum dans la première base de temps, le coefficient multiplicateur étant défini en fonction de la valeur minimum.

Selon un mode de réalisation, le système est configuré pour : mémoriser pour chaque traitement une seconde variable d'état indiquant si le traitement réalise une entrée/sortie par rapport à un processeur du système exécutant le traitement, et si la seconde variable d'état de l'un des traitements indique que le traitement ne réalise pas d'entrée/sortie, lancer l'exécution du traitement dès la fin de l'exécution d'un traitement précédent, sans attendre le début de la fenêtre temporelle du traitement.

Des exemples de réalisation de l'invention seront décrits dans ce qui suit, à titre non limitatif en relation avec les figures jointes parmi lesquelles :

la figure 1 représente schématiquement un calculateur multitâche,
les figures 2A et 2B représentent des chronogrammes de deux tâches,
la figure 3 représente schématiquement sous la forme d'un chronogramme un plan d'ordonnancement des deux tâches des figures 2A, 2B,
la figure 4 représente schématiquement sous la forme d'un chronogramme, un plan de charge, selon un mode de réalisation,
la figure 5 représente schématiquement sous la forme d'un chronogramme, un plan de charge, selon un autre mode de réalisation,
les figures 6A, 6B, 7 et 8 représentent des étapes exécutées par un noyau temps-réel du calculateur temps-réel, selon différents modes de réalisation.

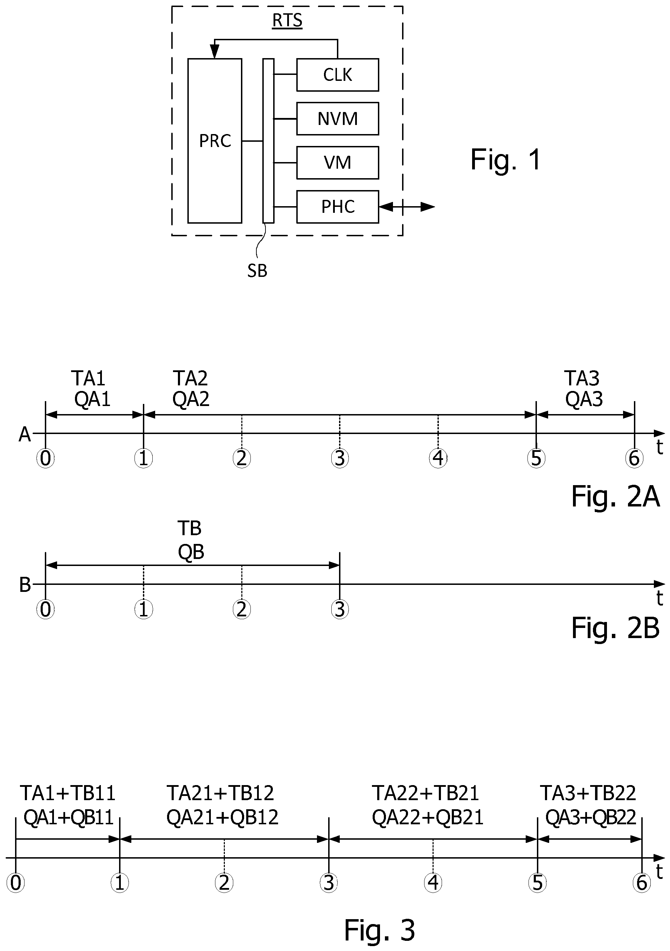

La figure 1 représente un calculateur multitâche RTS comprenant un ou plusieurs processeurs PRC, un circuit d'horloge CLK, une ou plusieurs mémoires non volatiles NVM (réinscriptibles ou non), une ou plusieurs mémoires volatiles VM (par exemple de type RAM - Random Access Memory), et un ou plusieurs circuits d'interface PHC configurés pour assurer le contrôle d'organes périphériques (non représentés) et/ou recevoir des signaux de tels organes. Le processeur PRC est relié aux circuits CLK, NVM, VM et PHC par l'intermédiaire d'un bus d'adresse et de donnée SB. Le circuit d'horloge CLK est en outre connecté à une entrée d'interruption du processeur PRC, pour déclencher une interruption lorsqu'une certaine durée programmable s'est écoulée. A cet effet, le processeur PRC peut transmettre par le bus SB, la valeur de la durée et activer le circuit CLK.

La mémoire NVM mémorise les programmes de tâches d'une application multitâche, et des données relatives à l'application. La mémoire VM mémorise des données variables utilisées lors de l'exécution de l'application. A noter que la mémoire NVM peut être omise si les programmes à exécuter sont transmis au calculateur au lancement de l'application multitâche.

Le processeur PRC peut comprendre un ou plusieurs microprocesseurs ou microcontrôleurs, qui eux-mêmes peuvent comprendre chacun un ou plusieurs coeurs ou unités de traitement. Le processeur PRC peut être également constitué ou comprendre un ou plusieurs circuits de type ASIC (Application Spécifie Integrated Circuit) ou FPGA (Field-Programmable Gate Array). Le processeur PRC exécute un noyau temps-réel qui comprend notamment des fonctions nécessaires à l'exécution d'une application multitâche temps-réel, comme des fonctions de mise en oeuvre d'un plan d'ordonnancement de tâches, des fonctions de gestion de contextes d'exécution de tâches, et des fonctions de gestion d'un ou plusieurs chien de garde pour surveiller le temps d'exécution des traitements.

Pour une application temps-réel critique, il peut être nécessaire de démontrer que le support d'exécution (calculateur RTS) est suffisant, notamment en terme de puissance de calcul, pour satisfaire les besoins de temps d'exécution de toutes les tâches de l'application, et ce dans le pire des cas. Quelles que soient les approches utilisées pour ordonnancer les tâches, cette démonstration peut être apportée par la vérification formelle d'un système d'équations de charge (cf. documents [1], [2], [3]). La méthode présentée ici est indépendante du choix de la méthode d'ordonnancement et du système associé d'équations de charge à vérifier. Pour illustrer par l'exemple la manière de procéder, on s'appuie sur une représentation générale (cf. document [3] par exemple).

La figure 2A représente sur un chronogramme, dans une base de temps t, une tâche A cyclique qui peut être décomposée en trois traitements TA1, TA2 et TA3 exécutés de manière répétitive. Le traitement TA1 est exécuté sur une fenêtre temporelle notée [0,1[, définie par un instant de début au plus tôt t=0 et un instant de fin au plus tard t=1. La fenêtre temporelle [0,1[ présente donc une durée de une unité de temps. Le traitement TA2 est exécuté sur une fenêtre temporelle [1,5[ de durée de 4 unités de temps entre les instants t=1 et t=5. Le traitement TA3 est exécuté sur une fenêtre temporelle [5,6[ de durée une unité de temps entre les instants t=5 et t=6. Les besoins de temps d'exécution respectifs des traitements TA1, TA2, TA3 dans chacune de ces fenêtres temporelles [0,1[, [1,5[, [5,6[ sont notés QA1, QA2 et QA3, ces besoins étant définis compte tenu des capacités d'un calculateur multitâche cible.

La figure 2B représente sur un chronogramme, dans la même base de temps t, une tâche B cyclique qui ne comprend qu'un seul traitement TB, exécuté de manière répétitive, sur une fenêtre temporelle [0,3[ de durée de 3 unités de temps entre les instants t=0 et t=3. Le besoin de temps d'exécution du traitement TB dans la fenêtre temporelle [0,3[ est noté QB.

Pour construire un plan d'ordonnancement des tâches A et B, les traitements des tâches sont répartis sur leurs fenêtres temporelles respectives de sorte que les besoins de chaque traitement soient satisfaits. Ceci conduit à fragmenter certains traitements sur plusieurs fenêtres temporelles plus petites, afin que dans chaque fenêtre temporelle considérée, les traitements et/ou fragments de traitement associés à cette fenêtre temporelle puissent être exécutés entièrement, tout en respectant les contraintes temporelles de chaque tâche. En d'autres termes, les traitements sont fragmentés pour que toutes les fenêtres temporelles considérées soient contigües (la fin d'une fenêtre correspond au début d'une autre fenêtre) et disjointes (sans zone commune à deux fenêtres). Il en résulte alors des conditions sur les fragments de traitement qui doivent être respectées pour que toutes les tâches de l'application puissent être ordonnancées.

La figure 3 représente un plan d'ordonnancement des tâches A et B. Le traitement TA2 est fragmenté en deux parties TA21 et TA22 pour prendre en compte l'instant t=3 de la tâche B qui correspond au début d'une fenêtre temporelle de réactivation du traitement TB, et qui se produit durant la fenêtre temporelle du traitement TA2. De la même façon, le traitement TB de la tâche B est fragmenté sur la fenêtre temporelle [0,3[ en deux parties TB11 et TB12 pour prendre en compte l'instant t=1 de début de la fenêtre temporelle [1,5[ du traitement TA2 de la tâche A, et qui se produit durant la fenêtre temporelle du traitement TB. L'occurrence du traitement TB associée à la fenêtre temporelle [3,6[ est également fragmentée en deux parties TB21 et TB22 pour prendre en compte l'instant t=5 de début de fenêtre temporelle du traitement TA3 de la tâche A, du fait que cet instant se produit durant la fenêtre temporelle de cette occurrence du traitement TB. Ces fragmentations différentes des deux occurrences du traitement TB sont nécessaires pour construire un plan d'ordonnancement répétitif des tâches A et B. La durée de la séquence répétitive des tâches A, B prises ensemble est égale au plus petit commun multiple (PPCM) des durées des séquences répétitives de chaque tâche. Dans l'exemple de la figure 3, la tâche A est associée à une fenêtre temporelle ayant une durée de 6 unités de temps, tandis que la tâche B est associée à une fenêtre temporelle présentant une durée de 3 unités de temps. La durée de la séquence répétitive des tâches A, B est égale au PPCM de 6 et 3, soit 6 unités de temps, correspondant à deux occurrences de la tâche B. De cette fragmentation, il résulte que le traitement TA1 et le fragment de traitement TB11 doivent être exécutés durant la fenêtre temporelle [0,1[. Les fragments de traitement TA21 et TB12 doivent être exécutés durant la fenêtre temporelle [1,3[. Les fragments de traitement TA22 et TB21 doivent être exécutés durant la fenêtre temporelle [3,5[. Le traitement TA3 et le fragment de traitement TB22 doivent être exécutés durant la fenêtre temporelle [5,6[.

Par ailleurs, les besoins de temps d'exécution des fragments de traitement TA21 et TA22 sont notés respectivement QA21 et QA22. De même, les besoins de temps d'exécution des fragments de traitement TB11, TB12, TB21 et TB22 sont notés respectivement QB11, QB12, QB21 et QB22. Dans chaque fenêtre temporelle représentée sur la Figure 3, il peut être défini une équation (ou inéquation) de charge à vérifier pour que les tâches A et B puissent être ordonnancées. Cette équation spécifie que la somme des besoins des traitements ou fragments de traitement d'une même fenêtre temporelle est inférieure à la durée en unité de temps de la fenêtre temporelle. Ainsi, il résulte de la figure 3 le système d'équations de charge suivant :

$$QA1 + QB11 \leq 1 \qquad\qquad (E1)$$

$$QA21 + QB12 \leq 2 \qquad\qquad (E2)$$

$$QA22 + QB21 \leq 2 \qquad\qquad (E3)$$

$$QA3 + QB22 \leq 1 \qquad\qquad (E4)$$

Ce système d'équations définit une condition nécessaire et suffisante pour certains algorithmes d'ordonnancement, tels que ceux présentés dans les documents [1] et [3]. Ce système d'équations est utilisé pour démontrer que le dimensionnement du calculateur multitâche est correct. A noter que pour l'algorithme d'ordonnancement RMS (Rate Monotonie Scheduling - cf. documents [1], [2]), ce système ne définit pas une condition suffisante dans tous les cas, cette condition devant être corrigée selon une formule indiquée dans le document [1]. Cependant cette correction ne modifie en rien la méthode présentée. La façon de calculer les besoins QA21, QA22, QB11, QB12, QB21, QB22, des fragments a été définie par la théorie de l'ordonnancement et ne concerne pas l'invention. Pour plus de détails, on peut se référer par exemple au document [3].

Selon un mode de réalisation, un nouveau système d'équations de charge est dérivé du système d'équations de charge défini précédemment, en y introduisant un facteur multiplicateur K supérieur à 1 en partie gauche des signes d'inégalité. Dans l'exemple de la figure 3, le nouveau système d'équation de charge est dérivé du système (E1) - (E4) de la manière suivante :

$$K \cdot (QA1 + QB11) \leq 1 \qquad\qquad (E1')$$

$$K \cdot (QA21 + QB12) \leq 2 \qquad\qquad (E2')$$

$$K \cdot (QA22 + QB21) \leq 2 \qquad\qquad (E3')$$

$$K \cdot (QA3 + QB22) \leq 1 \qquad\qquad (E4')$$

Selon la valeur du coefficient K, ce nouveau système d'équations peut avoir ou ne pas avoir de solution. On définit ainsi un coefficient multiplicateur maximum $Kx$ des besoins en temps de calcul des tâches, tel que l'application temps-réel (exécutée par un calculateur donné, par exemple le calculateur RTS) puisse être ordonnancée, c'est-à-dire, tel que le nouveau système d'équations (E1 ') - (E4') ait une solution.

A partir du système d'équations de charge initial (E1) - (E4), chaque besoin peut être substitué par le même besoin multiplié par le coefficient $Kx$, tout en garantissant que l'application temps-réel (exécutée par un système donné) peut être ordonnancée. Dans l'exemple de la figure 3, on a donc la garantie de pouvoir ordonnancer les besoins étendus $Kx \cdot QA1$ et $Kx\ QB11$ sur la première fenêtre temporelle $[0,1[$, les besoins étendus $Kx \cdot QA21$ et $Kx \cdot QB12$ sur la seconde fenêtre temporelle $[1,3[$, etc.

Au-delà de l'exemple utilisé, la multiplication des besoins par le coefficient $Kx$ est applicable quel que soit le système d'équations obtenu par la méthode d'ordonnancement appliquée (cf. notamment documents [1], [2], [3]). Il est à noter aussi que pour une application temps-réel critique, il est habituel de garder des marges sur les besoins et les performances du calculateur multitâche sur lequel l'application doit être exécutée. Le coefficient $Kx$ peut ainsi être déterminé à partir de la marge en temps de calcul de manière à ce que par exemple 100% de la ressource de temps de calcul du calculateur soit occupée. A titre d'exemple, une marge de 20% correspond à une valeur du coefficient $Kx$ égale à 5/4, et une marge de 50% correspond à une valeur du coefficient $Kx$ égale à 2. Il est à noter également que la notion de marge est souvent mal formalisée, au contraire de la définition du coefficient $Kx$ qui énonce un critère formel à appliquer à des quantités mesurables. Le fait de multiplier les besoins de temps de calcul par le coefficient $Kx$, offre donc la garantie dans le pire des cas de toujours disposer au minimum de la marge calculée pour tous les traitements, et non d'une valeur moyenne.

Dans l'exemple présenté en figure 3, il résulte de la définition du coefficient $Kx$ que la charge maximale est atteinte sur au moins une fenêtre temporelle (où $kx \cdot Q$ = durée en unité de temps de la fenêtre temporelle, Q étant le besoin des traitements associés à la fenêtre temporelle), mais pas nécessairement sur chacune d'elle selon les valeurs des besoins.

En conséquence, la multiplication des besoins réels des traitements par le coefficient Kx (supérieur à 1) permet d'obtenir un plan de d'ordonnancement des tâches dans lequel le besoin réel Qi de temps d'exécution de chaque traitement Ti est étendu par ajout d'une marge de temps d'exécution Mi égale à $(Kx-1)\cdot Qi$. Le plan d'ordonnancement des tâches peut comprendre également des temps morts correspondant au reliquat des fenêtres temporelles où la charge maximale n'est pas atteinte.

La construction du plan d'ordonnancement des tâches nécessite de connaître les valeurs des besoins réels de temps d'exécution, et d'affecter les traitements à des fenêtres temporelles. Les besoins réels des traitements et l'affectation de ces traitements à des fenêtres temporelles permettent de déterminer la valeur du coefficient Kx. La méthode d'ordonnancement retenue peut ensuite être appliquée. Ainsi, à partir de la figure 3, en supposant par exemple que le maximum de charge est atteint sur les première et seconde fenêtres temporelles [0,1 [ et [1,3[, on obtient le système d'équations suivant :

$$Kx\cdot(QA1 + QB11) = 1 \qquad\qquad (E1")$$

$$Kx\cdot(QA21 + QB12) = 2 \qquad\qquad (E2")$$

$$Kx\cdot(QA22 + QB21) \leq 2 \qquad\qquad (E3")$$

$$Kx\cdot(QA3 + QB22) \leq 1 \qquad\qquad (E4")$$

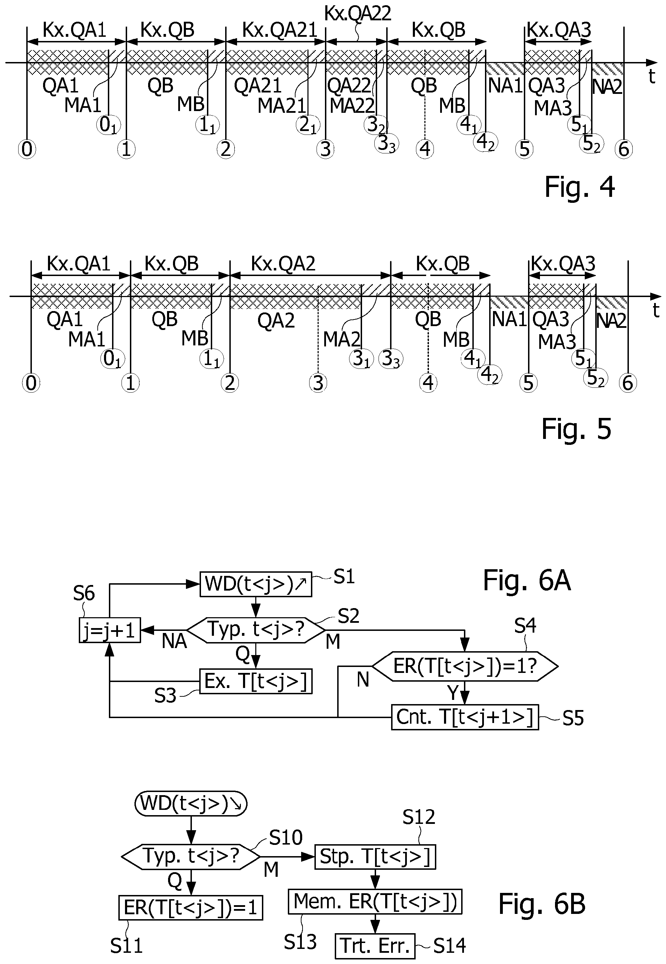

La vérification du système d'équations (E1") - (E4") conduit au plan de charge représenté sur la figure 4. La figure 4 représente un plan de charge sous la forme d'un chronogramme dans lequel sont représentées les fenêtres temporelles [i,i+1 [ (avec i = 0, 1, 2, 3, 4 et 5), les besoins réels QA1, QA21, QA22, QA3, QB par des zones quadrillées le long de l'axe des temps t, les marges de temps d'exécution MA1, MA21, MA22, MA3, MB associées par des zones hachurées au dessus de l'axe des temps t, et par des zones hachurées en dessous de l'axe des temps t, les temps morts NA1, NA2 des fenêtres temporelles où la charge maximale n'est pas atteinte. Dans ce plan de charge, chaque fenêtre temporelle est associée à un traitement ou fragment de traitement unique. Compte tenu de la durée en unité de temps des fenêtres temporelles, les besoins de certains fragments de traitement peuvent être fixés. Ainsi, les besoins QB12 et QB22 des deux occurrences du traitement TB peuvent être fixés à QB. Il en résulte que les besoins QB12 et QB22 sont fixés à 0.

Il peut être observé dans le plan de charge de la figure 4 que le traitement TB est associé à deux fenêtres temporelles distinctes et de durées différentes. En effet, le plan de charge comporte deux occurrences du traitement TB l'une affectée à la fenêtre temporelle [1,2[, et l'autre affectée à la fenêtre temporelle $[3_2,5[$.

Le plan de charge de la figure 4 est également découpé en tranches temporelles, chacune pouvant être de type besoin de traitement, marge de traitement ou temps mort. Ainsi les besoins successifs QA1, QB, QA21, QA22, QB et QA3 sont respectivement associés aux tranches temporelles $[0,0_1[$, $[1,1_1[$, $[2,2_1[$, $[3,3_2[$, $[3_3,4_2[$ et $[5,5_1[$. Les marges successives MA1, MB, MA21, MA22, MB, MA3 sont respectivement associées aux tranches temporelles $[0_1,1[$, $[1_1,2[$, $[2_1,3[$, $[3_2,3_3[$, $[4_1,4_2[$ et $[5_1,5_2[$. Les temps morts NA1, NA2 sont respectivement associées aux tranches temporelles $[4_2,5[$ et $[5_2,6[$.

D'un point de vue de la charge du calculateur multitâche, le plan de charge de la figure 4 est conforme aux équations (E1 ") - (E4"), mais il peut être noté que comme certains traitements sont fragmentés, les marges de temps d'exécution associées aux besoins peuvent également être fragmentées. Ainsi, dans l'exemple ci-dessus, le besoin QA2 apparait fragmenté en deux parties QA21 et QA22 distinctes. Il en est de même des marges associées MA21, MA22. Cette fragmentation peut conduire à redéfinir les fenêtres temporelles. En effet, la transition entre le besoin étendu Kx.QA22 du fragment de traitement TA22, et le besoin QB de la seconde occurrence du traitement TB implique la présence à cet instant d'une limite de fenêtre temporelle notée $[3_2]$ sur la figure 4. Le traitement TA22 est ainsi associé à la fenêtre temporelle $[3, 3_2[$. Par ailleurs, comme le besoin QB de la seconde occurrence du traitement TB s'étend avant et après l'instant [4], cet instant ne correspond plus à une limite de fenêtre temporelle. La seconde occurrence du traitement TB est ainsi associée à la fenêtre temporelle $[3_2,5[$.

Afin de fournir un plan d'ordonnancement statique permettant d'utiliser au mieux les marges attribuées aux traitements, notamment pour traiter les erreurs, en particulier les erreurs de dépassement d'un besoin prévu de temps d'exécution, le plan de charge peut être ré-agencé comme représenté sur la figure 5. Par rapport au plan de charge de la figure 4, le plan de charge de la figure 5 est modifié par le regroupement des marges de temps d'exécution MA21 et MA22 associées aux besoins QA21 et QA22. A cet effet, la marge MA21 associée au fragment TA21 a été déplacée juste avant la marge MA22, et ces deux marges ont été fusionnées pour former une marge MA2 égale à (Kx-1)·QA2. Dans l'exemple de la figure 5, les besoins QA21 et QA22 du traitement TA2 ont pu être également fusionnés, après le déplacement de la marge MA21, car ils sont contigus. A noter que la possibilité de regrouper des besoins de fragments de traitement n'est pas fréquente du fait qu'une application temps-réel présente généralement davantage que deux tâches. Ce regroupement de besoins et de marges conduit également à redéfinir les fenêtres temporelles concernées, tout en respectant les échéances des traitements définies par les fenêtres temporelles initialement attribuées à ces derniers. En effet, en raison du regroupement des besoins QA21 et QA22, l'instant [3] ne correspond plus à une limite de fenêtre temporelle. Ce regroupement conduit également à réattribuer un instant $[3_1]$ de fin de besoin QA2 au traitement TA2, l'instant

$[3_2]$ ne correspondant plus à une fin de besoin ou à un début de marge. A noter que la fenêtre temporelle $[2,3_3[$ qui est maintenant attribuée au traitement TA2 est incluse dans la fenêtre [1,5[ initialement attribuée à ce traitement. Ce regroupement conduit donc à redéfinir les tranches temporelles entre les instants [2] et $[3_3]$. Ainsi, dans l'exemple de la figure 5, le besoin QA2 du traitement TA2 est associé à la tranche $[2,3_1[$, et la marge MA2 de ce traitement est associée à la tranche $[3_1,3_3[$.

Il est ainsi possible de construire, pour un ensemble de tâches cadencées par une même base de temps, un plan d'ordonnancement des tâches garantissant qu'en cas d'erreur, le temps alloué au traitement de l'erreur soit garanti (sans déborder sur le temps alloué aux autres traitements), permettant un traitement d'erreur en temps déterministe compatible avec les contraintes d'un système temps-réel critique constitué par un calculateur multitâche exécutant une application temps-réel. En cas d'erreur de dimensionnement du calculateur multitâche, due aux variations du temps d'exécution des traitements, cette méthode permet d'améliorer la robustesse du système temps-réel multitâche en diminuant au maximum les cas d'erreur résiduelle à un nombre extrêmement bas, et sans interférence avec l'exécution des autres tâches. Cette méthode permet ainsi une approche modulaire et compositionnelle de l'ordonnancement des tâches d'une application temps-réel, ce qui diminue les tests nécessaires pour valider le dimensionnement du calculateur dans son ensemble. Cette méthode permet de réaliser des systèmes temps-réel critiques pour lesquels une indépendance temporelle est requise entre toutes les tâches (non-interférence), et de faciliter la certification de tels systèmes. Cette méthode permet aussi de réduire le surdimensionnement du processeur d'exécution, ce qui est un avantage important pour les calculateurs embarqués ayant une relativement faible capacité de traitement.

Il est à noter que dans le cas général, les tranches temporelles ne sont pas nécessairement ordonnées comme dans les figures 4 et 5. En effet, si pour chaque traitement Ti, l'ordre des tranches de besoin Qi, de marge MAi et éventuellement de temps mort NA est respecté, les tranches temporelles attribuées aux différents traitements du plan d'ordonnancement peuvent être imbriquées de n'importe quelle manière. Ainsi, plusieurs tranches de temps de type quota de différents traitements peuvent être contiguës. De même, plusieurs tranches de temps de type marge de différents traitements peuvent être contiguës. Il importe simplement que les tranches temporelles de quota et de marge de chaque traitement soient comprises dans la fenêtre temporelle initialement attribuée au traitement.

Les modes de réalisation illustrés par les figures 4 et 5, permettent également de limiter la longueur des périodes sans arrêt d'exécution du processeur PRC, ce qui peut limiter la montée en température du processeur (avec des bénéfices sur la fiabilité et la durée de vie). Les périodes où le processeur n'exécute pas de traitements appartenant aux tâches critiques peuvent aussi être utilisées pour exécuter des tâches non critiques ayant très souvent des besoins récurrents, comme la gestion d'entrées/sorties avec une faible latence.

En général, le contrôle du respect des besoins alloués est effectué par un chien de garde (watchdog) qui est armé au lancement d'un traitement ou fragment de traitement, avec une temporisation définissant un quota de temps alloué au traitement ou fragment de traitement, qui peut être fixé en fonction de la valeur du besoin du traitement ou fragment de traitement. Ainsi, dans ce qui suit, les quotas de temps d'exécution alloués aux traitements sont égaux aux besoins tels que définis précédemment. Le chien de garde se déclenche à la fin de la temporisation si le traitement ou fragment de traitement n'est pas achevé.

Les figures 6A, 6B représentent des étapes S1 à S6 et S10 à S14, qui sont exécutées par le noyau temps-réel du calculateur RTS. Les étapes S1 à S6 de la figure 6A sont exécutées en permanence pour activer un chien de garde WD pour qu'il puisse éventuellement se déclencher à la fin de chaque tranche temporelle du plan d'ordonnancement. Les étapes S10 à S14 de la figure 6B sont exécutées au déclenchement du chien de garde WD. Dans ce qui suit, le terme "traitement" désigne indifféremment un traitement ou un fragment de traitement. Pour exécuter certaines des étapes des figures 6A, 6B, le noyau temps-réel du calculateur RTS dispose de tables qui sont générées à partir du plan d'ordonnancement ou du plan de charge des traitements des tâches de l'application temps-réel. Ces tables peuvent comprendre notamment des listes de traitements de l'application, et des listes de paramètres définissant les tranches temporelles attribuées à chacun des traitements. Dans la liste des traitements de l'application, chaque traitement Ti peut être associé à une ou plusieurs tranches temporelles de type quota de temps Qi et de type marge de temps Mi. Dans la liste des tranches temporelles, chaque tranche est associée à un traitement ou un fragment de traitement, à un type (quota, marge ou temps mort) et à la durée de la tranche temporelle et/ou aux instants de début et de fin de la tranches temporelle.

**EP 2 987 081 B1**

Sur la figure 6A, l'étape S1 est exécutée au début d'une tranche temporelle notée t<j>. Le processeur PRC accède à la liste des tranches temporelles pour déterminer les paramètres nécessaires à l'activation du chien de garde WD pour que ce dernier se déclenche à la fin de la tranche temporelle t<j>, et active le chien de garde. A l'étape S2, le processeur PRC détermine le type de la tranche temporelle t<j>. Si la tranche temporelle t<j> est de type quota Q, le processeur PRC lance le traitement T[t<j>] associé à la tranche temporelle t<j> à l'étape S3. Si la tranche temporelle t<j> est de type marge M, le processeur PRC exécute l'étape S4. A l'étape S4, le processeur PRC teste un indicateur d'erreur ER(T[t<j>]) associé au traitement T[t<j>]. Si cet indicateur d'erreur ER(T[t<j>]) signale que le traitement T[t<j>] est en erreur de dépassement de quota, le processeur PRC poursuit l'exécution du traitement T[t<j>] à l'étape S5. A la suite de l'exécution des étapes S3, S5 et dans le cas où le traitement T[t<j>] n'est pas en erreur de dépassement de quota, le processeur PRC exécute l'étape S6 pour incrémenter un compteur j permettant de passer au traitement de la tranche temporelle suivante t<j+1>.

A l'étape S10 de la figure 6B, qui est exécutée au déclenchement du chien de garde WD (en cas de dépassement de quota ou de marge) activé pour la tranche temporelle t<j>, le processeur PRC détermine si le déclenchement du chien de garde est dû à l'expiration d'un quota de temps ou d'une marge de temps d'un traitement en testant le type (Q / M / NA) de la tranche temporelle t<j>. Si le déclenchement du chien de garde WD est dû à l'expiration d'un quota de temps, l'étape S11 est exécutée. Si ce déclenchement est dû à l'expiration d'une marge de temps, les étapes S12 à S14 sont exécutées.

A l'étape S11, le quota de temps alloué au traitement T[t<j>] est expiré avant la fin de l'exécution du traitement. Le processeur PRC se met alors dans un mode d'erreur, par exemple en activant un indicateur d'erreur ER pour le traitement T[t<j>]. A l'étape S12, la marge de temps allouée au traitement T[t<j>] est expirée sans que l'exécution du traitement soit terminée. Le processeur PRC arrête alors l'exécution du traitement T[t<j>]. A l'étape S13, le processeur PRC peut mémoriser qu'une erreur de dépassement de quota de temps a été détectée pour le traitement T[t<j>]. A l'étape S14, le processeur PRC peut exécuter un traitement général d'erreur tel que prévu dans le noyau temps-réel. Ce traitement général d'erreur est suffisamment court pour ne pas empiéter sur la fenêtre temporelle suivante et donc sur le temps alloué au traitement suivant, afin de respecter la règle de non interférence entre les traitements. Il peut être également prévu d'exécuter un traitement d'erreur spécifique à l'application ou au traitement T[t<j>] en dépassement de quota, durant une fenêtre temporelle ultérieure, affectée au traitement, toujours afin de respecter la règle de non interférence entre les traitements.

Il est à noter que la poursuite de l'exécution d'un traitement en cas d'erreur de dépassement de quota de temps résulte d'un simple choix de conception de l'application temps-réel. Dans certains cas, il peut être prévu de mettre en oeuvre d'autres modes de traitement de cette erreur que celui décrit précédemment, comme par exemple l'arrêt définitif du traitement en erreur de dépassement de quota de temps, et l'exécution d'un traitement alternatif prévu pour un fonctionnement dégradé de la tâche ou du système temps-réel, présentant un besoin en temps d'exécution inférieur à la marge de temps du traitement en erreur.

Dans le cas de l'exécution d'un traitement fragmenté, il convient de distinguer le cas où le chien de garde signale la fin du quota attribué à un premier ou un fragment intermédiaire, du cas où il signale la fin du besoin du dernier fragment d'un traitement. Dans le premier cas, le chien de garde signale simplement le passage d'un traitement à un autre, lors d'un changement de fenêtre temporelle, durant l'exécution d'un traitement fragmenté. Dans le second cas, le chien de garde signale un épuisement du quota du traitement fragmenté, donc une anomalie.

Selon un mode de réalisation, lorsqu'il subsiste des traitements fragmentés dans le plan de séquencement, une variable d'état est associée à chaque traitement ou fragment de traitement, pour indiquer si celui-ci est un premier fragment ou un fragment intermédiaire d'un traitement fragmenté, ou bien si celui-ci est un traitement non fragmenté ou un dernier fragment d'un traitement fragmenté. Cette variable d'état est utilisée pour ne pas attribuer de marge au fragment de traitement si celui-ci est un premier fragment ou un fragment intermédiaire, et ne pas générer d'erreur à l'expiration du quota de temps du fragment de traitement. Cette variable d'état peut être générée automatiquement pour chaque traitement ou fragment, par exemple lors de la génération du code exécutable de l'application temps-réel, et insérée dans les tables définissant le plan de charge de l'application.

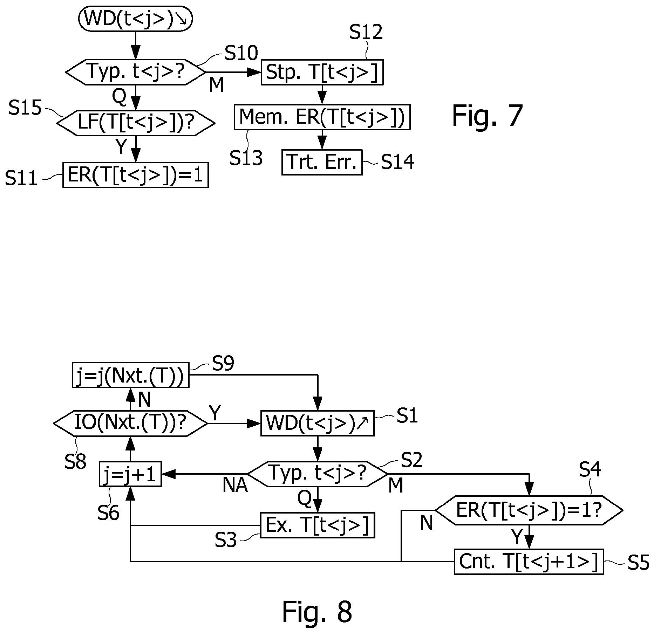

Cette variable d'état peut être exploitée par exemple comme représenté sur la figure 7. Ainsi, la figure 7 représente les étapes S10 à S14 de la figure 6B, et une étape supplémentaire S15 interposée entre les étapes S10 et S11. L'étape S15 est donc exécutée au déclenchement du chien de garde WD lors de l'expiration du quota de temps du traitement T[t<j>]. A l'étape S15, le processeur PRC teste une variable d'état LF(T[t<j>]) signalant si le traitement T[t<j>] est soit un premier fragment ou un fragment intermédiaire d'un traitement fragmenté, soit un traitement complet (non fragmenté) ou un dernier fragment d'un traitement fragmenté. Si la variable LF(T[t<j>]) indique que le traitement en cours d'exécution T[t<j>] est un traitement complet ou un dernier fragment d'un traitement fragmenté, l'étape S11 précédemment décrite est exécutée pour activer le mode d'erreur. Dans le cas contraire, le mode d'erreur n'est pas activé.

Il est à noter que comme aucune marge de temps n'est attribuée à un premier fragment ou un fragment intermédiaire d'un traitement fragmenté, toute la marge de temps attribuée au traitement fragmenté est attribuée au dernier fragment du traitement fragmenté.

Selon un mode de réalisation, une variable d'état est associée à chaque traitement ou fragment de traitement pour indiquer si celui-ci réalise ou non des entrées et/ou sorties du processeur PRC. Une entrée/sortie désigne par exemple un accès en écriture ou lecture à une variable globale de l'application temps-réel dans la mémoire VM ou NVM, ou un transfert de signal ou de donnée entre le processeur PRC et un organe périphérique via le circuit PHC. Cette variable d'état est utilisée pour anticiper un traitement ne réalisant pas d'entrées et/ou sorties, sans attendre le début de la fenêtre temporelle à laquelle il est associé. Cette variable d'état peut être générée automatiquement pour chaque traitement ou fragment de traitement par exemple lors de la génération du code exécutable de l'application temps-réel, et insérée dans les tables définissant le plan de charge et d'ordonnancement de l'application.

Cette variable d'état peut être exploitée par exemple comme représenté sur la figure 8. La figure 8 représente les étapes S1 à S6 de la figure 6A, et deux étapes supplémentaires S8 et S9 interposées entre les étapes S6 et S1. A l'étape S8, le processeur PRC détermine la prochaine tranche temporelle associée à un traitement Nxt.(T), et si cette tranche temporelle est de type quota Q, il teste la variable d'état signalant la présence d'entrées/sorties dans le traitement suivant Nxt.(T) dans le plan de charge. Si la variable IO(Nxt.(T)) indique que le traitement Nxt.(T) ne réalise pas d'entrées/sorties, le processeur PRC exécute l'étape S9 pour lancer l'exécution du traitement Nxt.(T) aux étapes S1-S2-S3 pour la tranche temporelle déterminée à l'étape S8. Dans le cas contraire, l'étape S1 est exécutée pour la fenêtre temporelle t<j+1> qui suit celle qui vient d'être traitée. Bien entendu, il va de soi que les étapes des figures 7 et 8 peuvent être exécutées en combinaison, afin de mettre en oeuvre à la fois les variables d'état LF et IO.

Cette disposition permet donc d'anticiper dynamiquement les traitements prévus dans le plan de séquencement, et ainsi de repousser les marges associées non utilisées, ce qui a pour effet de regrouper les marges non utilisées et les éventuels temps morts en une seule marge, jusqu'à une fenêtre temporelle associée à un traitement ou fragment de traitement réalisant des entrées/sorties, qui ne peut pas être anticipé. Cette disposition ne remet pas en cause le comportement déterministe du système, ni les garanties de fonctionnement énoncées précédemment. Le regroupement de marges et/ou de temps morts présente l'avantage de permettre la mise en oeuvre d'activités secondaires qui peuvent comprendre l'exécution de tâches non critiques ou non temps-réel, qui peuvent ainsi être exécutées avec moins d'interruptions et donc moins de commutation de contexte d'exécution. Il en résulte un gain en performance, et donc en consommation d'énergie et en température moyenne du processeur. Si le processeur est mis en sommeil durant les marges regroupées, il peut ainsi être mis en sommeil plus longtemps avec pour conséquence une réduction de la température et de la consommation d'énergie résultant de la durée de cette mise en sommeil. Ce regroupement de marges permet également une réduction du nombre d'activations des mécanismes d'endormissement du processeur. En outre, la possibilité d'anticipation des traitements, permet d'obtenir un meilleur dimensionnement du système temps-réel, et en conséquence, d'obtenir des performances globales encore plus élevées. A noter que ces avantages sont obtenus sans affecter la sécurité du fonctionnement du système temps réel.

Dans la majorité des systèmes temps-réel, la mesure du temps pour contrôler les temps d'exécution des traitements et celle utilisée pour décrire les contraintes temporelles (découpage du temps en fenêtres temporelles) sont basées sur une même source, issue d'un circuit d'horloge, par exemple le circuit CLK. Cependant, cette condition n'est pas nécessaire. En effet, certains systèmes temps-réel peuvent être cadencés pour la délimitation des fenêtres temporelles par des événements extérieurs non réguliers (non liés à un signal d'horloge). A titre d'exemple, ces événements extérieurs peuvent être liés à la position d'un objet en mouvement, comme par exemple la position angulaire d'un arbre de moteur tournant à vitesse variable, ou la phase d'un signal électrique alternatif dont la période n'est pas strictement constante.

Dans une approche classique, le fait d'avoir à utiliser une base de temps non régulière ne permet pas de construire aisément un séquencement de tâches, ce qui conduit à utiliser des algorithmes d'ordonnancement dynamique. Au contraire, le procédé présenté précédemment permet de procéder exactement de la même façon. En effet, les besoins et les quotas de temps sont toujours exprimés dans l'unité de temps d'exécution du processeur, définie par un premier signal d'horloge, tandis que les contraintes temporelles, et donc le séquencement des traitements, sont exprimés dans une base de temps différente définie par un second signal non régulier, comme par exemple un signal de mesure de position angulaire. Néanmoins pour que l'application puisse être ordonnancée, il existe une relation entre les deux signaux, permettant de déterminer une durée minimum d'une unité de temps du second signal, mesurée avec le premier signal d'horloge. Dans cette hypothèse, la valeur du coefficient Kx peut toujours être calculée en fonction de cette valeur minimum. Par conséquent, il est toujours possible de définir les marges de besoin en multipliant les besoins par le coefficient Kx.

Selon un mode de réalisation, le coefficient Kx est fixé à une valeur calculée en fonction de la durée minimum de l'unité de temps définie par le second signal, mesurée avec le premier signal d'horloge. Il en résulte que les durées respectives des marges sont fixes, tandis que les temps morts varient et en particulier augmentent lorsque l'unité de temps définie par le second signal s'éloigne de sa valeur minimum.

Les mêmes caractéristiques et avantages que ceux décrits précédemment en termes de performance et de sûreté, sont ainsi conservés quelles que soient les variations de vitesse de la base de temps non régulière, sur la base de laquelle les contraintes temporelles d'exécution (c'est-à-dire les fenêtres temporelles) sont définies.

Il apparaîtra clairement à l'homme de l'art que la présente invention est susceptible de diverses variantes de réalisation et diverses applications. En particulier, l'invention n'est pas limitée à l'utilisation des marges de temps pour poursuivre l'exécution d'un traitement en dépassement de quota de temps. En effet, d'autres traitements d'erreur peuvent être prévus, tels que par exemple l'exécution d'un traitement d'erreur spécifique au traitement.

Par ailleurs, les marges de temps attribuées aux traitements d'une application temps-réel ne sont pas nécessairement proportionnelles aux quotas de temps attribués à ces traitements. D'autres modes de calcul des durées respectives des marges de temps peuvent être employés. Il importe simplement que l'application temps réel puisse être ordonnancée, compte tenu des quotas et des marges de temps attribués, ainsi que des ressources de temps de calcul attribuées à l'application. Ainsi, la marge attribuée à chaque traitement peut être définie de manière spécifique en fonction du traitement.

Documents cités

[1] "Scheduling Algorithms for Multiprogramming in a Hard Real-Time Environment", C. L. Liu, J. W. Layland, Journal of the Association for Computing Machinery, vol. 20, no. 1, January 1973, pp. 46-61.
[2] "Foundations of Real-Time Computing: Scheduling and Resource Management", edited by André M. Van Tilborg, Gary M. Koob, 1991, Kluwer Academic Publishers.
[3] "A Method and a Technique to Model and Ensure Timeliness in Safety Critical Real-Time Systems", C. Aussaguès, V. David, Fourth IEEE International Conférence on Engineering of Complex Computer Systems, 1998.
[4] Demande de brevet WO/2002/039277 ou US/2004/0078547.
[5] "The Worst-Case Execution Time Problem - Overview of Methods and Survey of Tools", R. Wilhelm, J. Engblom, A. Ermedahl, N. Holsti, S. Thesing, D. Whalley, G. Bernat, C. Ferdinand, R. Heckmann, T. Mitra, F. Mueller, I. Puaut, P. Puschner, J. Staschulat, P. Stenström, ACM Transactions on Embedded Computing Systems (TECS), 2007.
[6] "Giotto: A Time-Triggered Language for Embedded Programming", T. A. Henzinger, B. Horowitz, C. M. Kirsch, EMSOFT 2001, pp. 166-184, 2001, Springer-Verlag.
[7] Demande de brevet WO/2006/050967
[8] Demande de brevet US/2010/0199280.

**Revendications**

**1.** Procédé d'exécution de tâches d'une application temps-réel sur un calculateur multitâche (RTS), chacune des tâches (A, B) comprenant au moins un traitement (Ti), **caractérisé en ce que** le procédé comprend des étapes consistant à :

définir des fenêtres temporelles associées chacune à l'exécution d'un traitement d'une tâche de l'application, attribuer à chaque traitement ayant une fenêtre temporelle, un quota de temps (Qi) et une marge de temps (Mi), le temps attribué au traitement par le quota de temps et la marge de temps, étant inférieur à la durée de la fenêtre temporelle associée au traitement,
durant l'exécution de l'application par le calculateur multitâche, activer chaque traitement au début de la fenêtre temporelle attribuée au traitement,
à l'expiration du quota de temps de l'un des traitements, activer un mode d'erreur pour ledit traitement si l'exécution dudit traitement n'est pas terminée,
si le mode d'erreur est actif pour l'un des traitements, exécuter une procédure de traitement d'erreur pour le traitement en mode d'erreur, durant le temps restant attribué au traitement par le quota de temps et la marge de temps, et poursuivre l'exécution du traitement (Ti) dont l'exécution n'est pas terminée à l'expiration du quota de temps (Qi) attribué au traitement, en surveillant l'expiration de la marge de temps (Mi) attribuée au traitement, et
à l'expiration de la marge de temps attribuée au traitement, si l'exécution du traitement n'est pas terminée, mettre fin à l'exécution du traitement et exécuter un traitement d'erreur de dépassement de quota de temps.

**2.** Procédé selon la revendication 1, comprenant des étapes consistant à :

fragmenter les traitements associés à une fenêtre temporelle s'étendant sur plusieurs fenêtres temporelles de traitements d'autres tâches de l'application, de manière que chaque fenêtre temporelle soit associée exclusivement à un traitement ou fragment de traitement,

attribuer à chacun des fragments de traitement (TA21, TA22) d'un traitement fragmenté un quota de temps (QA21, QA22) tel que la somme des quotas de temps de tous les fragments du traitement fragmenté soit égale au quota de temps (QA2) du traitement fragmenté, la marge de temps (MA22) attribuée au traitement fragmenté (TA2) étant associée au dernier fragment (TA22) du traitement fragmenté, et

associer à chaque fragment de traitement (TA21, TA22) à une première variable d'état (LF) indiquant s'il est le dernier fragment du traitement fragmenté (TA2), le mode d'erreur n'étant pas activé à l'expiration du quota de temps (QA21) d'un fragment de traitement (TA21) si la première variable d'état associée au fragment de traitement indique que le fragment de traitement n'est pas un dernier fragment d'un traitement fragmenté (TA2).

3. Procédé selon l'une des revendications 1 et 2, dans lequel la marge de temps (Mi) de chacun des traitements (Ti) associés à un quota de temps (Qi) est calculée en appliquant un coefficient multiplicateur (Kx) au quota de temps du traitement, le coefficient multiplicateur étant identique pour tous les traitements associés à un quota de temps.

4. Procédé selon la revendication 3, dans lequel le coefficient multiplicateur (Kx) est déterminé de manière que les tâches de l'application puissent être ordonnancées compte tenu des besoins de temps des traitements, des fenêtres temporelles associées aux traitements, et de caractéristiques du calculateur (RTS).

5. Procédé selon la revendication 3 ou 4, dans lequel les traitements sont exécutés par un processeur (PRC) cadencé par une première base de temps, et les fenêtres temporelles associées aux traitements (Ti) sont définies dans une seconde base de temps non régulière par rapport à la première base de temps, une unité de temps dans la seconde base de temps présentant une valeur minimum dans la première base de temps, le coefficient multiplicateur (Kx) étant défini en fonction de la valeur minimum.

6. Procédé selon l'une des revendications 1 à 5, dans lequel chaque traitement (Ti) est associé à une seconde variable d'état (IO) indiquant s'il réalise une entrée/sortie par rapport à un processeur (PRC) exécutant le traitement, et si la seconde variable d'état associée à l'un des traitements indique que le traitement ne réalise pas d'entrée/sortie, l'exécution du traitement est lancée sans attendre le début de la fenêtre temporelle du traitement, dès la fin de l'exécution d'un traitement précédent.

7. Système multitâche temps-réel comprenant un calculateur multitâche (RTS) exécutant une application temps-réel comprenant plusieurs tâches, chacune des tâches (A, B) comprenant au moins un traitement (Ti),
**caractérisé en ce que** le système est configuré pour :

mémoriser des fenêtres temporelles associées chacune à l'exécution d'un ensemble de traitements de tâches de l'application,
mémoriser pour chaque traitement ayant une fenêtre temporelle, un quota de temps (Qi) et une marge de temps (Mi), le temps attribué au traitement par le quota de temps et la marge de temps, étant inférieur à la durée de la fenêtre temporelle du traitement,
exécuter chacun des traitements de l'application au début de la fenêtre temporelle attribuée au traitement,
à l'expiration du quota de temps de l'un des traitements, activer un mode d'erreur pour ledit traitement si l'exécution dudit traitement n'est pas terminée, et
si le mode d'erreur est actif pour l'un des traitements, exécuter une procédure de traitement d'erreur pour le traitement en mode d'erreur, durant le temps restant attribué au traitement par le quota de temps et la marge de temps, et poursuivre l'exécution du traitement (Ti) dont l'exécution n'est pas terminée à l'expiration de son quota de temps (Qi), en surveillant l'expiration de la marge de temps (Mi) attribuée au traitement, et
à l'expiration de la marge de temps, si l'exécution du traitement n'est pas terminée, mettre fin à l'exécution du traitement et exécuter un traitement d'erreur de dépassement de quota de temps.

8. Système selon la revendication 7, configuré pour :

mémoriser que certains des traitements associés à une fenêtre temporelle sont fragmentés,
mémoriser pour chaque fragment de traitement une fenêtre temporelle et un quota de temps, pour l'exécution du fragment de traitement,
mémoriser pour un dernier fragment de chaque traitement fragmenté, en tant que marge de temps associée, la marge de temps (MA22) associée au traitement fragmenté (TA2), et
mémoriser pour chaque fragment de traitement (TA21, TA22) une première variable d'état (LF) indiquant si le fragment est le dernier fragment d'un traitement fragmenté (TA2), et
durant l'exécution de l'application, ne pas activer le mode d'erreur à l'expiration du quota de temps (QA21) d'un fragment de traitement (TA21) si la première variable d'état associée au fragment de traitement indique que le fragment de traitement n'est pas un dernier fragment d'un traitement fragmenté (TA2).

9. Système selon l'une des revendications 7 et 8, configuré pour déterminer la marge de temps (Mi) de chacun des traitements (Ti) associés à un quota de temps (Qi) en appliquant un coefficient multiplicateur (Kx) au quota de temps du traitement, le coefficient multiplicateur étant identique pour tous les traitements associés à un quota de temps.

10. Système selon la revendication 9, comprenant un processeur (PRC) cadencé par une première base de temps, pour exécuter les traitements, et recevant une seconde base de temps non régulière par rapport à la première base de temps, le système étant configuré pour déterminer les fenêtres temporelles associées aux traitements (Ti) dans la seconde base de temps, une unité de temps dans la seconde base de temps présentant une valeur minimum dans la première base de temps, le coefficient multiplicateur (Kx) étant défini en fonction de la valeur minimum.

11. Système selon l'une des revendications 7 à 10, configuré pour :

mémoriser pour chaque traitement (Ti) une seconde variable d'état (IO) indiquant si le traitement réalise une entrée/sortie par rapport à un processeur (PRC) du système exécutant le traitement, et

si la seconde variable d'état de l'un des traitements indique que le traitement ne réalise pas d'entrée/sortie, lancer l'exécution du traitement dès la fin de l'exécution d'un traitement précédent, sans attendre le début de la fenêtre temporelle du traitement.

**Patentansprüche**

1. Verfahren zur Ausführung von Aufgaben einer Echtzeitanwendung auf einem Multitasking-Rechner (RTS), wobei jede der Aufgaben (A, B) mindestens eine Verarbeitung (Ti) umfasst,
**dadurch gekennzeichnet, dass** das Verfahren Schritte umfasst, bestehend aus:

Definieren von Zeitfenstern, die jeweils der Ausführung einer Verarbeitung einer Aufgabe der Anwendung zugeordnet sind,

Zuweisen eines Zeitkontingents (Qi) und einer Zeitreserve (Mi) zu jeder Verarbeitung, die ein Zeitfenster aufweist, wobei die Zeit, die der Verarbeitung durch das Zeitkontingent und die Zeitreserve zugewiesen wird, kleiner ist als die Dauer des der Verarbeitung zugeordneten Zeitfensters,

während der Ausführung der Anwendung durch den Multitasking-Rechner, Aktivieren jeder Verarbeitung zu Beginn des Zeitfensters, das der Verarbeitung zugewiesen ist,

zum Ablauf des Zeitkontingents einer der Verarbeitungen, Aktivieren eines Fehlermodus für die Verarbeitung, wenn die Ausführung der Verarbeitung nicht abgeschlossen ist,

wenn der Fehlermodus bei einer der Verarbeitungen aktiv ist, Ausführen einer Fehlerverarbeitungsprozedur bei der Verarbeitung im Fehlermodus während der verbleibenden Zeit, die der Verarbeitung durch das Zeitkontingent und die Zeitreserve zugewiesen ist, und Fortsetzen der Ausführung der Verarbeitung (Ti), deren Ausführung zum Ablauf des der Verarbeitung zugewiesenen Zeitkontingents (Qi) nicht abgeschlossen ist, unter Überwachung des Ablaufs der der Verarbeitung zugewiesenen Zeitreserve (Mi), und

zum Ablauf der der Verarbeitung zugewiesenen Zeitreserve, wenn die Ausführung der Verarbeitung nicht abgeschlossen ist, Beenden der Ausführung der Verarbeitung und Ausführen einer Zeitkontingentüberschreitungsfehler-Verarbeitung.

2. Verfahren nach Anspruch 1, umfassend die Schritte bestehend aus:

Fragmentieren der einem Zeitfenster zugeordneten Verarbeitungen, die sich über mehrere Zeitfenster von Verarbeitungen anderer Aufgaben der Anwendung erstrecken, sodass jedes Zeitfenster ausschließlich einer Verarbeitung oder einem Verarbeitungsfragment zugeordnet ist,

Zuweisen eines Zeitkontingents (QA21, QA22) zu jedem der Verarbeitungsfragmente (TA21, TA22) einer fragmentierten Verarbeitung, sodass die Summe der Zeitkontingente aller Fragmente der fragmentierten Verarbeitung gleich dem Zeitkontingent (QA2) der fragmentierten Verarbeitung ist, wobei die der fragmentierten Verarbeitung (TA2) zugewiesene Zeitreserve (MA22) dem letzten Fragment (TA22) der fragmentierten Verarbeitung zugeordnet ist, und

Zuordnen einer ersten Zustandsvariablen (LF) zu jedem Verarbeitungsfragment (TA21, TA22), die angibt, ob es sich um das letzte Fragment der fragmentierten Verarbeitung (TA2) handelt, wobei der Fehlermodus nicht zum Ablauf des Zeitkontingents (QA21) eines Verarbeitungsfragments (TA21) aktiviert wird, wenn die dem Verarbeitungsfragment zugeordnete erste Zustandsvariable angibt, dass das Verarbeitungsfragment nicht ein letztes Fragment einer fragmentierten Verarbeitung (TA2) ist.

3. Verfahren nach einem der Ansprüche 1 oder 2, wobei die Zeitreserve (Mi) jeder der Verarbeitungen (Ti), die einem Zeitkontingent (Qi) zugeordnet sind, durch Anwendung eines Multiplikationskoeffizienten (Kx) auf das Zeitkontingent der Verarbeitung berechnet wird, wobei der Multiplikationskoeffizienten für alle einem Zeitkontingent zugeordneten Verarbeitungen gleich ist.

4. Verfahren nach Anspruch 3, wobei der Multiplikationskoeffizienten (Kx) so bestimmt wird, dass die Aufgaben der Anwendung unter Berücksichtigung des Zeitbedarfs für die Verarbeitungen, der den Verarbeitungen zugeordneten Zeitfenster und der Eigenschaften des Rechners (RTS) in ein Reihenfolge gebracht werden können.

5. Verfahren nach Anspruch 3 oder 4, wobei die Verarbeitungen durch einen Prozessor (PRC) ausgeführt werden, der durch eine erste Zeitbasis getaktet wird, und die den Verarbeitungen (Ti) zugeordneten Zeitfenster in einer zweiten Zeitbasis definiert sind, die in Bezug auf die erste Zeitbasis nicht regelmäßig ist, wobei eine Zeiteinheit in der zweiten Zeitbasis einen Minimalwert in der ersten Zeitbasis repräsentiert, wobei der Multiplikationskoeffizienten (Kx) in Abhängigkeit von dem Minimalwert definiert wird.

6. Verfahren nach einem der Ansprüche 1 bis 5, wobei jeder Verarbeitung (Ti) eine zweite Zustandsvariable (IO) zugeordnet wird, die angibt, ob sie in Bezug auf einen Prozessor (PRC), der die Verarbeitung ausführt, eine Ein-/Ausgabe durchführt, und wenn die zweite Zustandsvariable, die einer der Verarbeitungen zugeordnet wurde, angibt, dass die Verarbeitung keine Ein-/Ausgabe durchführt, wird die Ausführung der Verarbeitung gestartet, sobald die Ausführung einer vorhergehenden Verarbeitung beendet ist, ohne den Beginn des Zeitfensters der Verarbeitung abzuwarten.

7. Echtzeit-Multitasking-System, umfassend einen Multitasking-Rechner (RTS), der eine Echtzeit-Anwendung mit mehreren Aufgaben ausführt, wobei jede der Aufgaben (A, B) mindestens eine Verarbeitung (Ti) umfasst, **dadurch gekennzeichnet, dass** das System konfiguriert ist zum:

Speichern von Zeitfenstern, die jeweils der Ausführung einer Gesamtheit von Bearbeitungen von Aufgaben der Anwendung zugeordnet sind,
Speichern eines Zeitkontingents (Qi) und einer Zeitreserve (Mi) für jede Verarbeitung, die ein Zeitfenster aufweist, wobei die Zeit, die der Verarbeitung durch das Zeitkontingent und die Zeitreserve zugewiesen wird, kleiner ist als die Dauer des Zeitfensters der Verarbeitung,
Ausführen jeder der Anwendungsverarbeitungen zu Beginn des Zeitfensters, das der Verarbeitung zugewiesen wurde,
zum Ablauf des Zeitkontingents einer der Verarbeitungen, Aktivieren eines Fehlermodus für die Verarbeitung, wenn die Ausführung der Verarbeitung nicht abgeschlossen ist,
wenn der Fehlermodus bei einer der Verarbeitungen aktiv ist, Ausführen einer Fehlerverarbeitungsprozedur bei der Verarbeitung im Fehlermodus während der verbleibenden Zeit, die der Verarbeitung durch das Zeitkontingent und die Zeitreserve zugewiesen ist, und Fortsetzen der Ausführung der Verarbeitung (Ti), deren Ausführung zum Ablauf ihres Zeitkontingents (Qi) nicht abgeschlossen ist, unter Überwachung des Ablaufs der der Verarbeitung zugewiesenen Zeitreserve (Mi), und
zum Ablauf der Zeitreserve, wenn die Ausführung der Verarbeitung nicht abgeschlossen ist, Beenden der Ausführung der Verarbeitung und Ausführen einer Zeitkontingentüberschreitungsfehler-Verarbeitung.

8. System nach Anspruch 7, das konfiguriert ist zum:

Abspeichern, dass einige der einem Zeitfenster zugeordneten Verarbeitungen fragmentiert sind,
Speichern eines Zeitfensters und eines Zeitkontingents zur Ausführung des Verarbeitungsfragments für jedes Verarbeitungsfragment,
Speichern der der fragmentierten Verarbeitung (TA2) zugeordnete Zeitreserve (MA22) für ein letztes Fragment jeder fragmentierten Verarbeitung als zugeordnete Zeitreserve, und
Speichern einer ersten Statusvariablen (LF) für jedes Verarbeitungsfragment (TA21, TA22), die angibt, ob das Fragment das letzte Fragment einer fragmentierten Verarbeitung (TA2) ist, und
während der Ausführung der Anwendung, Nicht-Aktivieren des Fehlermodus zum Ablauf des Zeitkontingents (QA21) eines Verarbeitungsfragments (TA21), wenn die erste dem Verarbeitungsfragment zugeordnete Statusvariable angibt, dass das Verarbeitungsfragment nicht ein letztes Fragment einer fragmentierten Verarbeitung (TA2) ist.

9. System nach einem der Ansprüche 7 oder 8, das dazu konfiguriert ist, die Zeitreserve (Mi) jeder der Verarbeitungen (Ti), die einem Zeitkontingent (Qi) zugeordnet sind, zu bestimmen, indem auf das Zeitkontingent der Verarbeitung ein Multiplikationskoeffizienten (Kx) angewendet wird, wobei der Multiplikationskoeffizienten für alle einem Zeitkontingent zugeordneten Verarbeitungen gleich ist.

10. System nach Anspruch 9, das einen Prozessor (PRC) zum Ausführen der Verarbeitungen umfasst, der durch eine erste Zeitbasis getaktet wird, und das eine zweite Zeitbasis empfängt, die in Bezug auf die erste Zeitbasis nicht regelmäßig ist, wobei das System so konfiguriert ist, dass es die den Verarbeitungen (Ti) zugeordneten Zeitfenster in der zweiten Zeitbasis bestimmt, wobei eine Zeiteinheit in der zweiten Zeitbasis einen Minimalwert in der ersten Zeitbasis repräsentiert, wobei der Multiplikationskoeffizienten (Kx) in Abhängigkeit von dem Minimalwert definiert wird.

11. System nach einem der Ansprüche 7 bis 10, das konfiguriert ist zum:

Speichern einer zweiten Zustandsvariablen (IO), die angibt, ob die Verarbeitung in Bezug auf einen Prozessor (PRC) des Systems, der die Verarbeitung ausführt, eine Ein-/Ausgabe durchführt, für jede Verarbeitung (Ti) und wenn die zweite Statusvariable einer der Verarbeitungen angibt, dass die Verarbeitung keine Ein-/Ausgabe durchführt, Starten der Ausführung der Verarbeitung, sobald die Ausführung einer vorherigen Verarbeitung beendet ist, ohne auf den Beginn des Zeitfensters für die Verarbeitung zu warten.

## Claims

1. A method for executing tasks of a real-time application on a multitasking computer (RTS), each task (A, B) comprising at least one processing operation (Ti),
**characterised in that** the method comprises steps of:

defining time windows each associated with the execution of a processing operation of a task of the application, allocating to each processing operation having a time window, a time quota (Qi) and a time margin (Mi), the time allocated to the processing operation by the time quota and the time margin being shorter than the duration of the time window associated with the processing operation,
during the execution of the application by the multitasking computer, activating each processing operation at the start of the time window associated with the processing operation,
on expiry of the time quota of one of the processing operations, activating an error mode for said processing operation if the execution of said processing operation has not been completed, and
if the error mode is active for one of the processing operations, executing an error handling procedure for the processing operation in error mode during the remaining time allocated to the processing operation by the time quota and the time margin, and continuing the execution of the processing operation (Ti) the execution of which has not been completed on expiry of the time quota (Qi) allocated to the processing operation, while monitoring the expiry of the time margin (Mi) allocated to the processing operation, and
on expiry of the time margin allocated to the processing operation, if the execution of the processing operation has not been completed, ending the execution of the processing operation and executing a time quota overrun error handling operation.

2. The method according to claim 1, comprising steps of:

fragmenting the processing operations associated with a time window extending over several time windows for processing other tasks of the application, so that each time window is exclusively associated with a processing operation or processing operation fragment,
allocating a time quota (QA21, QA22) to each of the processing operation fragments (TA21, TA22) of a fragmented processing operation such that the sum of the time quotas of all the fragments of the fragmented processing operation is equal to the time quota (QA2) of the fragmented processing operation, the time margin (MA22) allocated to the fragmented processing operation (TA2) being associated with the last fragment (TA22) of the fragmented processing operation, and
associating with each processing operation fragment (TA21, TA22) a first state variable (LF) indicating whether it is the last fragment of the fragmented processing operation (TA2), the error mode not being activated on expiry of the time quota (QA21) of a processing operation fragment (TA21) if the first state variable associated with the processing operation fragment indicates that the processing operation fragment is not a last fragment of a fragmented processing operation (TA2).

3. The method according to one of claims 1 and 2, wherein the time margin (Mi) of each of the processing operations (Ti) associated with a time quota (Qi) is calculated by applying a multiplying factor (Kx) to the time quota of the processing operation, the multiplying factor being identical for all the processing operations associated with a time quota.

4. The method according to claim 3, wherein the multiplying factor (Kx) is determined so that the tasks of the application can be scheduled according to the time requirements of the processing operations, to the time windows associated with the processing operations, and to the features of the computer (RTS).

5. The method according to claim 3 or 4, wherein the processing operations are executed by a processor (PRC) clocked by a first time base, and the time windows associated with the processing operation (Ti) are defined in a second time base not regular compared to the first time base, a time unit in the second time base having a minimum value in the first time base, the multiplying factor (Kx) being defined according to the minimum value.

6. The method according to one of claims 1 to 5, wherein each processing operation (Ti) is associated with a second state variable (IO) indicating whether it performs an input/output in relation to a processor (PRC) executing the processing operation and, if the second state variable associated with one of the processing operations indicates that the processing operation does not perform any input/output, the execution of the processing operation is launched without waiting for the start of the time window of the processing operation, as soon as the execution of a previous processing operation ends.

7. A real-time multitasking system comprising a multitasking computer (RTS) executing a real-time application comprising several tasks, each task (A, B) comprising at least one processing operation (Ti), the system being configured to:

store time windows, each associated with the execution of a set of processing operations of tasks of the application,

store for each processing operation having a time window, a time quota (Qi) and a time margin (Mi), the time allocated to the processing operation by the time quota and the time margin being shorter than the duration of the time window of the processing operation,

execute each of the processing operations of the application at the start of the time window allocated to the processing operation,

on expiry of the time quota of one of the processing operations, activate an error mode for said processing operation if the execution of said processing operation has not been completed,

if the error mode is active for one of the processing operations, to execute an error handling procedure for the processing operation in error mode during the remaining time allocated to the processing operation by the time quota and the time margin, and continue the execution of the processing operation (Ti) the execution of which has not been completed on expiry of its time quota (Qi), while monitoring the expiry of the time margin (Mi) allocated to the processing operation, and

on expiry of the time margin, if the execution of the processing operation has not been completed, to end the execution of the processing operation and execute a time quota overrun error handling operation.

8. The system according to claim 7, configured to:

store the fact that some of the processing operations associated with a time window are fragmented,

store for each processing operation fragment a time window and a time quota, for the execution of the processing operation fragment,

store for a last fragment of each fragmented processing operation, as associated time margin, the time margin (MA22) associated with the fragmented processing operation (TA2), and

store for each processing operation fragment (TA21, TA22) a first state variable (LF) indicating whether the fragment is the last fragment of a fragmented processing operation (TA2), and

during the execution of the application, not activate the error mode on expiry of the time quota (QA21) of a processing operation fragment (TA21) if the first state variable associated with the processing operation fragment indicates that the processing operation fragment is not a last fragment of a fragmented processing operation (TA2).

9. The system according to one of claims 7 and 8, configured to determine the time margin (Mi) of each of the processing operations (Ti) associated with a time quota (Qi) by applying a multiplying factor (Kx) to the time quota of the processing operation, the multiplying factor being identical for all the processing operations associated with a time quota.

10. The system according to claim 9, comprising a processor (PRC) clocked by a first time base, to execute the processing operations, and receiving a second time base not regular compared to the first time base, the system being configured to determine the time windows associated with the processing operations (Ti) in the second time base, a time unit in the second time base having a minimum value in the first time base, the multiplying factor (Kx) being defined according to the minimum value.

11. The system according to one of claims 7 to 10, configured to:

store for each processing operation (Ti) a second state variable (IO) indicating whether the processing operation performs an input/output in relation to a processor (PRC) of the system executing the processing operation, and if the second state variable of one of the processing operations indicates that the processing operation does not perform any input/output, to launch the execution of the processing operation as soon as the execution of a previous processing operation ends, without waiting for the start of the time window of the processing operation.

Fig. 1

Fig. 2A

Fig. 2B

Fig. 3

Fig. 4

Fig. 5

Fig. 6A

Fig. 6B

## Fig. 7

```
      ┌──────────────┐
      │  WD(t<j>)↘   │
      └──────┬───────┘
             │
             ▼
    ┌─────────────────┐              ┌──────────────┐  S12
    │   Typ. t<j>?    │──── S10 ─────│  Stp. T[t<j>]│
    └────────┬────────┘      M       └──────┬───────┘
           Q │                              │
             ▼                              ▼
S15 ┌─────────────────┐         ┌──────────────────────┐
    │   LF(T[t<j>])?  │         │   Mem. ER(T[t<j>])   │
    └────────┬────────┘         └──────────┬───────────┘
           Y │                     S13     │
             ▼                             ▼
S11 ┌──────────────────┐          ┌──────────────┐
    │  ER(T[t<j>])=1   │          │  Trt. Err.   │ S14
    └──────────────────┘          └──────────────┘
```

## Fig. 8

```
┌──────────────┐  S9
│  j=j(Nxt.(T))│──────────────────────────┐
└──────┬───────┘                          │
     N ▲                                  ▼
┌─────────────────┐   Y        ┌──────────────┐  S1
│  IO(Nxt.(T))?   │──────────→│  WD(t<j>)↗   │
└────────┬────────┘            └──────┬───────┘
   S8    ▲                            │
         │                            ▼
┌────────┴─────┐  NA  ┌─────────────────┐   M    ┌────────────────────┐  S4
│    j=j+1     │←─────│   Typ. t<j>?    │───────→│  ER(T[t<j>])=1?    │
└──────────────┘      └────────┬────────┘        └──────────┬─────────┘
   S6                        Q │               N           Y │
                               ▼                             ▼
                     ┌──────────────┐          ┌──────────────────────┐  S5
                     │  Ex. T[t<j>] │          │   Cnt. T[t<j+1>]     │
                     └──────────────┘          └──────────────────────┘
                        S3
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2002039277 A
- US 20040078547 A
- WO 2006050967 A
- US 20100199280 A

**Littérature non-brevet citée dans la description**

- A Spatial and Temporal Partitioning Approach for Dependable Automotive Systems. **D. CHABROL et al.** Emerging Technologies & Factory Automation, 2009 IEEE International Conférence on. IEEE, 22 Septembre 2009, 1-8
- A control-theoretic energy management for fault-tolerant hard real-time systems. **ALI SHARIF AHMADIAN et al.** Computer Design (ICCD), 2010 IEEE International Conférence on. IEEE, 03 Octobre 2010, 173-178
- **C. L. LIU ; J. W. LAYLAND.** Scheduling Algorithms for Multiprogramming in a Hard Real-Time Environment. *Journal of the Association for Computing Machinery,* Janvier 1973, vol. 20 (1), 46-61
- Foundations of Real-Time Computing: Scheduling and Resource Management. Kluwer Academic Publishers, 1991
- **C. AUSSAGUÈS ; V. DAVID.** A Method and a Technique to Model and Ensure Timeliness in Safety Critical Real-Time Systems. *Fourth IEEE International Conférence on Engineering of Complex Computer Systems,* 1998
- **R. WILHELM ; J. ENGBLOM ; A. ERMEDAHL ; N. HOLSTI ; S. THESING ; D. WHALLEY ; G. BERNAT ; C. FERDINAND ; R. HECKMANN ; T. MITRA.** The Worst-Case Execution Time Problem - Overview of Methods and Survey of Tools. *ACM Transactions on Embedded Computing Systems (TECS),* 2007
- Giotto: A Time-Triggered Language for Embedded Programming. **T. A. HENZINGER ; B. HOROWITZ ; C. M. KIRSCH.** EMSOFT 2001. Springer-Verlag, 2001, 166-184